Europäisches Patentamt

European Patent Office

Office européen des brevets

(11) Publication number:

**0 062 992**

**B1**

(12) **EUROPEAN PATENT SPECIFICATION**

(45) Date of publication of patent specification: **18.09.85**

(21) Application number: **82301613.4**

(22) Date of filing: **26.03.82**

(51) Int. Cl.⁴: **H 02 G 15/117, H 02 G 15/10**

(54) **Telephone cable splices.**

(30) Priority: **15.04.81 CA 375512**

(43) Date of publication of application:
**20.10.82 Bulletin 82/42**

(45) Publication of the grant of the patent:
**18.09.85 Bulletin 85/38**

(84) Designated Contracting States:
**DE FR GB NL SE**

(56) References cited:
**EP-A-0 010 576**
**CH-A- 618 293**
**DE-A-2 459 136**
**DE-A-2 937 036**
**GB-A-1 393 083**
**US-A-3 836 694**
**US-A-3 875 325**
**US-A-3 896 260**
**US-A-3 955 043**

(73) Proprietor: **NORTHERN TELECOM LIMITED**
**1600 Dorchester Boulevard West**
**Montreal Quebec H3H 1R1 (CA)**

(72) Inventor: **Trumble, William Patrick**
**30 Leacock Lane**
**Kanata Ontario, K2K 1R5 (CA)**
Inventor: **Finn, Roger Colin**
**56 Meadowbank Drive**
**Nepean Ontario, K2G 0N9 (CA)**
Inventor: **Jackson, Charles Fraser Cohoe**
**208 Clemow Avenue**
**Ottawa Ontario, K1S 2B4 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to apparatus for encapsulating a telecommunications cable splice.

In the installation, extension or repair of telephone cables, there is frequently a need to splice individual conductors of one cable to conductors of another, contiguous cable. In order to protect the conductors and connectors at the splice site from water and other contaminants, the spliced conductors must be encapsulated or otherwise protected.

In one known encapsulating technique, a thermosetting elastomer is used. After splicing the conductors, adhesive tape is wound onto the cable ends to form rigid collars and a mold is positioned to extend between the collars and surround the splice site. Unreacted thermosetting elastomer is then injected into the mold cavity and is allowed to cure. The amount of encapsulant used makes this technique expensive and operation time is long since elastomers having desired encapsulation properties are slow curing. Moreover the encapsulated joint produced is heavy and difficult to re-enter since the elastomer fuses with the material of both the cable sheath and insulation surrounding individual conductors of the cables.

Another protective covering technique uses heatshrinkable material, a plastic material that has been rendered dimensionally unstable during manufacture. A tube of heatshrinkable material surrounding a splice site shrinks appreciably to tightly embrace the underlying joint when heated by a torch. Although splice closure is achieved very quickly using heatshrink, it is a relatively expensive material and requires the use of an open flame which is not desirable if splice closure is taking place in a duct where gaseous build-up can occur. Moreover, although providing excellent radial protection for the joint, a heatshrink tube does not prevent water from seeping towards the splice site along the interior of one or other of the cables. Finally the technique is somewhat craft sensitive and produces a joint which is not as physically durable as might be desired.

A cable splice assembly is proposed in United States Patent 3896260 (Walter A. Plummer) which comprises an inner cover which is filled with a protective powder and disposed around the spliced conductors, and an outer jacket, enclosing the inner cover and the conductors. The outer jacket has a valve secured thereto which enables a liquid foam material to be injected into the jacket. The liquid foam material, after expanding and hardening, forms a relatively solid insulative foam which compresses the powder in the inner cover around the conductors. Porous gaskets are provided to close the apertures where the cable ends enter the outer jacket.

Types of foam which are suitable for enclosing spliced conductors are disclosed in DE—A—2459136, CH—A—618293 and US—A—3955043. These rigid closed cell foams are produced by mixing chemical reagents which react with each other to produce the foam.

A problem with using such liquid foam materials to encapsulate cable splices is that, unless the cable splice extends along the central part of the mold, an even distribution of the encapsulating layer around the cable splice cannot be ensured.

The present invention provides apparatus for encapsulating a telecommunications cable splice comprising a mold for surrounding the splice, the mold having apertures therein for entry of cable ends to the mold, blocking means for blocking the apertures around the cables whereby to define a mold cavity, the blocking means adapted to yield under internal pressure in the mold cavity to increase the effective volume of the cavity, and foam activating reagents for producing a rigid closed cell foam, the reagents present in quantities sufficient that the rigid closed cell foam produced thereby fills the mold, the apparatus characterized by suspension means for suspending the mold in an open position beneath the splice, the mold having a central part and two flanking parts, each of the parts being in the form of an elongate member of arcuate section, the mold material being locally reduced in thickness between adjacent ones of the members whereby the mold members can be hinged from the open position in which the central part is suspended beneath the splice to allow the reagents to be poured thereinto and the closed position in which the mold surrounds the splice.

The mold used in accordance with the present invention is hinged so that access can easily be had to the cable splice before the foam reagents are poured into the mold. When the reagents have been poured into the mold, the mold members are moved into the closed position.

The splice connections between the individual conductors are preferably encased in a secondary encapsulant, such as a bag of grease or urethane, and the splice wound with a protective film of material before being encapsulated within the foam.

The chemical reagents can react together to produce a blowing agent which appears as tiny bubbles within the reaction product, the bubbles being locked in a place when the foam solidifies. For a thermosetting reaction product the reagents preferably react exothermically. The reagents are thoroughly mixed in order to prevent large voids and unreacted sections in the solidified foam.

The ends of the mold at which cable entry occurs are preferably blocked with a flexible, open cell foam material which permits venting of pressure built up by the expanding foam and also serves to create a skin by puncturing the cells of the expanding foam at the boundary thereof. The open cell foam can also deform to accommodate any excess encapsulant in the mold.

The foam is preferably formed within a mold of, for example, a copolymer of polyethylene and polypropylene. The mold can have a cylindrical body portion and truncated end zones apertured for cable entry. The mold is a multiple-part structure hinged in a longitudinal plane.

An embodiment of the invention will now be described by way of example with reference to the accompanying drawings in which:—

Figure 1 is a longitudinal sectional view through an encapsulated splice;

Figure 2 is a perspective view of a mold housing;

Figure 3 is a perspective view of an alternative mold housing in accordance with the present invention; and

Figure 4 is a schematic cross-sectional view through an encapsulated splice using an alternative mold housing.

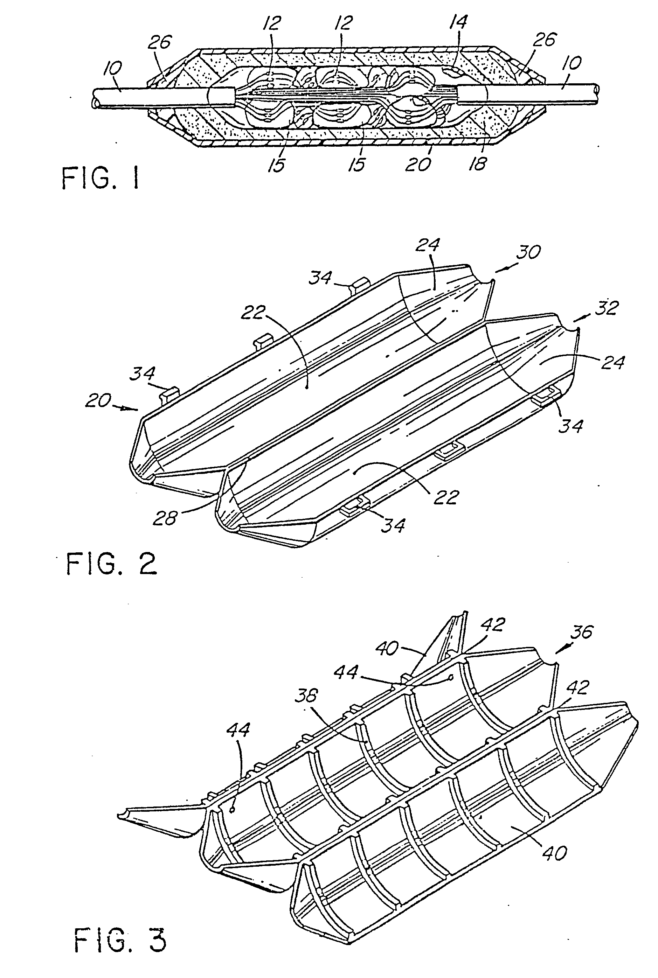

Referring in detail to the drawings, Figure 1 shows in longitudinal cross-section, a pair of cables 10, individual conductors of which are spliced to one another by connectors 12. Groups of connectors are tied into urethane filled bags for connector protection. At a central zone of the splice, the bagged connectors and conductor ends are wrapped in a polyethylene film 14. The polyethylene film 14 is itself surrounded by a mass of closed cell thermoset foam 18 housed within a medium density polyethylene polypropylene copolymer mold 20. The mold has a cylindrical central zone 22 and truncated conical end zones 24 allowing cable entry. The thermoset foam 18 is confined at the ends of the molds 20 by collars 26 of open cell foam material such as polyurethane.

In order to effect encapsulation of a splice, connector groups are initially manually inserted into bags filled with a urethane potting compound, "Z" Encapsulant (Trade name), and the central splice zone is wound with a film of polyethylene. Onto the sheathed cable ends is then wound a collar 26 of a highly flexible, open cell polyurethane foam tape having an adhesive backing. The size of collar 26 depends on the size of mold which is to encapsulate the splice. The collar 26 has a radial extent sufficient to contact the mold wall in the end zones but will not be so large that it has to be appreciably compressed in order that it will fit into the mold. As shown in Figure 2 the mold 20 is hinged into two parts 30 and 32 at an elongate weakened zone 28 in the mold wall. The splice is layed into the central zone 22 of the mold part 30 and the cable ends, with sheaths abraded and then coated in an acrylic adhesive, are located in the end zones 26. For a mold having a mold cavity free volume V, a V/5.65 mixture of methyl diphenyl isocyanate and polyether glycol in a weight ratio of approximately 5:4 is produced, the reagents being throughly mixed for several minutes. These materials are available from Biwax Corporation of the United States. Once mixing is complete, the mixture is immediately poured into the mold part 30 and the mold parts 30 and 32 are fastened together by integrally molded clip formations 34 along the two outer edges of the mold part. Within a few seconds of mixing, the mixture begins to foam and expands to several times its original volume, reaction heat very rapidly causing the resulting closed cell foam to set. The reaction produces a solid urea in which are trapped tiny bubbles of water vapour and $CO_2$, the water acting as a "blowing agent". Both the time taken for the various stages of the foaming reaction to take place and the nature of the foam obtained can be altered by adjusting the amounts or identities of the constituents used. As the foam material expands to fill the mold 20, it both partially deforms, and permeates into, the open cell foam collars 26. Threads of the collars 26 tend to puncture the closed cells so inducing a natural collapse at the boundary of the uncured foam as it presses into the collars. This action represents an inherent pressure valve, the collapsed cells also forming, in effect, a protective skin at the boundary of the foam. Because the foam collars are highly flexible they tend to compact somewhat and to be driven into the conical end zones 24 further relieving pressure within the mold cavity. They are however prevented from exiting the mold 20 by the conical form of the mold wall at the end zones 24. Use of an adaptor collar 26 of highly flexible foam allows multiple cable entry without the use of other adaptors or labour intensive cutting and shaping.

Referring to Figure 3 an alternative mold shown has a central region 36 of semicircular cross section, this region having strengthening ribs 38. Two arcuate section wing portions 40 are hinged to the central portion at weakened zones 42. In use, the central portion 38 is held under the splice with flexible ties (not shown) anchored at holes 44 punched through the wall of the mold. The ties extend around the splice to leave the mold central portion suspended under the splice. The foam mixture is then poured into the central portion 36, the wing portions 40 are folded in and tied into position and the foaming reaction takes place as described previously.

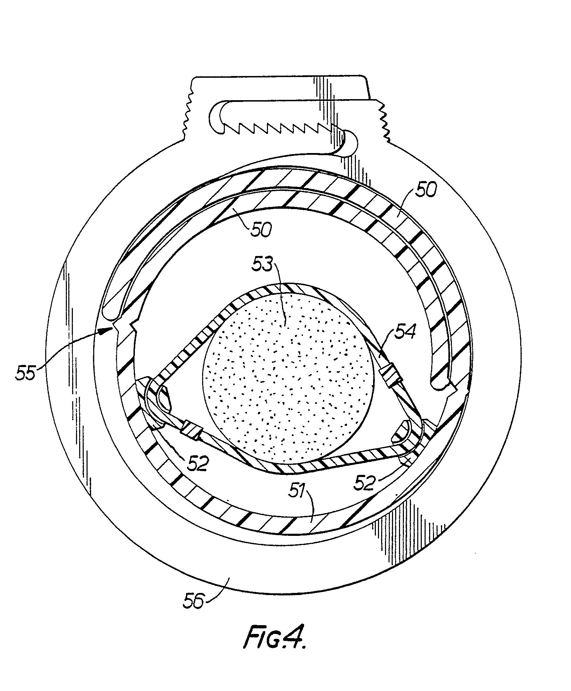

Referring to the sectional view of Figure 4, as an alternative to the Figure 2 mold, the mold can consist of two flanking parts 50 hinged to a central part 51. This design has the advantage that the mold and foam reagents which, during operation, are contained with the central part 50, are more easily balanced when the mold is suspended from a cable splice shown schematically as 53. The mold is suspended at locations spaced along the mold by tie-wraps 54 which extend through anchoring brackets 52 adhering to the inner surface of the mold part 51. Brackets 52 are preferable to holes through the mold since the latter may suffer from moisture ingress. The anchors 52 are slightly below the center line of the mold tending to draw the splice into the bottom mold section 51. On the other hand, the anchors are inclined to a vertical plane and so, together with the relatively stiff tie-wraps 54, the splice will, in fact, tend to centralize within the mold. Once the splice is properly positioned within the mold, and collars (not shown) have been fitted as previously described, the two flanking parts 50 are moved successively to cover the splice, one of the parts 50 covering the other part 50. The free edges of these two parts tend towards alignment longitudinally at molding distortions caused by the presence of hinge zones 55.

After pouring the mold foam reagents into the part 51 and before foaming takes place, the various parts of the mold are clamped in position by independent ring clamps 56 instead of by interacting mold formations such as those shown in Figure 2. The clamps 56, which can be attached and detached by hand, are available in a range of inside diameters from Cole Parmer Instrument Company under the specification No. C—6832—76.

The mold shown in Figure 4 may be vacuum formed from a sheet of 120 gauge polyethylene. The vacuum formed sheet is weakened to produce the hinge zones 55 by slicing part of the vacuum formed material away once it is rigid.

Before being encapsulated in foam, the splice connections are placed into a sock of open cell foam material which is, in turn, placed within a urethane filled bag. The entrance to the bag is tied and taped. Subsequently, the bag is manipulated to encourage this secondary encapsulant to penetrate between adjacent conductors and connectors.

The thermosetting foam used is quite rigid and can take a compressive stress of the order of 15 kg/cm² without deforming. Most importantly, the foam, being a closed cell material, is inherently waterproof, and can be made adherent to polyethylene so forming the effective waterproof seal with the cable and conductor sheath portions which it contacts.

An advantage of the foam closure is that the cable joint can be made re-enterable. In a first reentry method, a steel wire lanyard is laid the length of the splice and, except for an end portion, is sealed within the foam during the foaming reaction. Subsequently if access to the joint is required, for example, for repair purposes, then after removing the mold 20, the lanyard is pulled to cut the foam capsule along its length. In a second method a special blowing agent for example, an azobisisobutyronitrile is incorporated into the foam and decomposes into carbon and nitrogen when the foam is heated by torch to about 250°C. This causes spontaneous rupture of the individual cells, the foam falling away from the underlying splice. Care must be taken in order not to release toxic gases when heating the foam material; from this point of view a silicone based foam may be preferable.

The spliced conductors within the joint are free of foam since the splice is wrapped in polyethylene film before the foaming operation is performed. The polythene wrap has another function when encapsulating splices using grease filled cables. If the foaming reaction is exothermic it will melt the grease. If the melted grease is not kept away from the foaming reagents, the reaction product will be found to be at least partly open-cell which is undesirable.

It has been estimated that the materials used in foam closures are half the cost of the heatshrink tube and a third of the cost of the necessary amount of thermosetting elastomer for a comparable encapsulating operation. Moreover, foam encapsulating is comparable in installation time with heatshrink and takes considerably less time than potting the splice in a thermosetting elastomer. In fact, the closed joint can be buried or replaced in a duct immediately after the foaming action is complete. As indicated previously the resulting closure is waterproof, durable, re-enterable and is not craft sensitive.

A further advantage of the closures described is that they are relatively lightweight compared with an elastomer encapsulation. The weight of materials for encapsulating a 50 pair splice of 24 AWG wire is about 1 Kg. Although the invention has been described only in terms of splicing one cable to an identical cable, the same method and equipment can be used for encapsulating the joint between, for example, a 50 pair cable and two 25 pair cables. The only variation in the method described is to apply the open cell foam collars to the cable sheath end portions in a slightly different manner to that described for the illustrated embodiments. Thus in the example chosen, the two 25 pair cables are initially separately wound with the open cell foam and then are wound as a single unit so that an essentially oval collar is eventually produced around the two aligned, smaller cables. This will distort to circularity when the mold is fitted. A service wire cut out of the main cable is treated in a similar manner. The open cell foam is initially wound around the main cable, the service wire is positioned alongside the main cable and open cell foam is subsequently wound around both the cable and the service wire. The only change then is in the way in which the open cell foam strip is applied. The mold itself and the foaming reagents are versatile and can be used in diverse applications.

A splicing encapsulation kit which can be carried easily to splice sites consists of a mold, the wraps and anchors, open cell foam tape, foaming reagents, and outer clamps. The amounts of foaming reagents in the kit are selected so as to fill the mold, any slight excess then penetrating into the open cell foam collar. The nature of the collar, that is, its flexibility and permeability, is important. The properties of rigid, sealing collars used when potting splices in thermosetting elastomers by prior art methods, are quite unsuitable for use with the foaming technique described here.

Although the invention has been described only for the application of encapsulating splices between grease packed cables, the technique can be used for encapsulating joints between powder filled cables and between optical fiber cables. Also the encapsulation techniques can be used where the splice is to be aerially suspended or buried.

## Claims

1. Apparatus for encapsulating a telecommunications cable splice (53) comprising a mold (20) for surrounding the splice, the mold having apertures therein for entry of cable ends to the mold, blocking means (26) for blocking the apertures around the cables whereby to define a mold cavity, the blocking means adapted to yield under internal pressure in the mold cavity to increase the effective volume of the cavity, and foam activating reagents for producing a rigid closed cell foam, the reagents present in quantities sufficient that the rigid closed cell foam (18) produced thereby fills the mold, the apparatus characterized by suspension means (54, 52) for suspending the mold in an open position beneath the splice (53), the mold having a central part (51) and two flanking parts (50), each of the parts (50, 51) being in the form of an elongate member of arcuate section, the mold material being locally reduced in thickness (55) between adjacent ones of the members whereby the mold members can be hinged from the open position in which the central part (51) is suspended beneath the splice (53) to allow the reagents to be poured thereinto and the closed position in which the mold surrounds the splice (53).

2. Apparatus as claimed in claim 1 further characterized by the suspension means comprising a plurality of tie-wraps (54) and a plurality of anchor devices (52) integral with the mold.

3. Apparatus as claimed in claim 1 further characterized in that each of the parts (50, 51) is in the form of an elongate member of semicircular section, the mold in the closed position having truncated conical end parts.

4. Apparatus as claimed in claim 1 further characterized by a plurality of clamps which are hand attachable to the mold (20) to retain the mold (20) in said closed position.

5. Apparatus as claimed in claim 1 further characterized in that the blocking means are collars (26) of open cell foam applied to the cable ends.

6. Apparatus as claimed in claim 5, further characterized in that the open cell foam of the collars is initially highly flexible but has parts deformed and rendered rigid on penetration by said closed cell foam (18).

**Revendications**

1. Appareil pour l'enrobage d'une épissure (53) de câbles de télécommunications, comprenant un moule (20) pour entourer l'épissure, le moule présentant des ouvertures pour l'entrée des extrémités des câbles dans le moule, des moyens de blocage (26) pour bloquer les ouvertures autour des câbles et définir une cavité de moule, les moyens de blocage étant destinés à fléchir sous la pression interne régnant dans la cavité du moule de manière à augmenter le volume effectif de la cavité, et des réactifs d'activation de mousse pour produire une mousse rigide à cellules fermées, les réactifs étant présents en quantités suffisantes pour que la mousse rigide à cellules fermées (18) ainsi produite remplisse le moule, l'appareil étant caractérisé par un moyen de suspension (54, 52) destiné à suspendre le moule dans une position ouverte au-dessous de l'épissure (53), le moule ayant un partie centrale (51) et deux parties adjacentes (50), chacune des parties (50, 51) ayant la forme d'un élément allongé ayant une section en arc, le matériau du moule ayant une épaisseur (55) localement réduite entre les éléments contigus, d'où il résulte que les éléments du moule peuvent pivoter entre la position ouverte dans laquelle la partie centrale (51) est suspendue au-dessous de l'épissure (53) pour permettre le versement des réactifs et la position fermée dans laquelle le moule entoure l'épissure (53).

2. Appareil selon la revendication 1, caractérisé en outre en ce que le moyen de suspension comprend une pluralité de bandes d'attache (54) et un pluralité de dispositifs d'ancrage (52) en une pièce avec le moule.

3. Appareil selon la revendication 1, caractérisé en outre en ce que chacune des parties (50, 51) a la forme d'un élément allongé de section semi-circulaire, le moule ayant, dans la position fermée, des parties extrêmes tronconiques.

4. Appareil selon la revendication 1, caractérisé en outre par une pluralité de moyens d'assujettissement qui peuvent être fixés manuellement au moule (20) de manière à maintenir le moule (20) dans la position fermée.

5. Appareil selon la revendication 1, caractérisé en outre en ce que les moyens de blocage sont des colliers (26) en mousse à cellules ouvertes qui sont appliqués aux extrémités des câbles.

6. Appareil selon la revendication 5, caractérisé en outre en ce que la mousse à cellules ouvertes des colliers est initialement très flexible mais comporte des parties déformées et rendues rigides lors de la pénétration par la mousse à cellules fermées (18).

**Patentansprüche**

1. Vorrichtung zum Verkapseln einer Fernmeldekabel-Spleißung (53), mit einer Form (20) zum Umgeben der Spleißung, wobei die Form Öffnungen in sich enthält zum Einleiten der Kabelenden in die Form, Sperrmittel (26) zum Sperren der Öffnungen um die Kabel, um dadurch einen Formhohlraum zu bestimmen, die Sperrmittel ausgelegt sind, unter Innendruck in dem Formhohlraum nachzugeben, um das wirksame Volumen des Hohlraumes zu vergrößern, und mit Schaumaktivierungs-Reagenzien zum Erzeugen eines starren geschlossenzelligen Schaumes, wobei die Reagenzien in ausreichender Menge vorhanden sind, damit der dadurch erzeugte starre geschlossenzellige Schaum (18) die Form ausfüllt, wobei die Vorrichtung gekennzeichnet ist durch Aufhängungsmittel (54, 52) zum Aufhängen der Form in einer offenen Stellung unterhalb der Spleißung (53), wobei die Form einen zentralen Teil (51) und zwei flankierende Teile (50) besitzt, jeder der Teile (50, 51) die Form eines länglichen Elementes mit gekrümmten Querschnitt aufweist, das Formmaterial örtlich in seiner Stärke (55)

zwischen benachbarten Elementen verringert ist, wodurch die Formelemente von der offenen Stellung, in der der mittlere Teil (51) unterhalb der Spleißung (53) aufgehängt ist, um das Eingießen der Reagenzien zu gestatten, und der geschlossenen Stellung, in der die Form die Spleißung (53) umgibt, gelenkig geschwenkt werden können.

2. Vorrichtung nach Anspruch 1, weiter dadurch gekennzeichnet, daß die Aufhängungsmittel eine Vielzahl von Zugbändern (54) und eine Vielzahl von mit der Form integralen Verankerungseinrichtungen (52) umfassen.

3. Vorrichtung nach Anspruch 1, weiter dadurch gekennzeichnet, daß jeder der Teile (50, 51) die Form eines länglichen Elementes von halbkreisförmigem Querschnitt besitzt, wobei die Form in der geschlossenen Stellung kegelstumpfförmigkonische Endteile aufweist.

4. Vorrichtung nach Anspruch 1, weiter gekennzeichnet durch eine Vielzahl Klemmen, die von Hand an der Form (20) anbringbar sind, um die Form (20) in der geschlossenen Stellung zu halten.

5. Vorrichtung nach Anspruch 1, weiter dadurch gekennzeichnet, daß die Sperrmittel auf die Kabelenden aufgebrachte Krägen (26) aus offenzelligem Schaum sind.

6. Vorrichtung nach Anspruch 5, weiter dadurch gekennzeichnet, daß der offenzellige Schaum der Krägen anfänglich hochflexibel ist, jedoch Teile besitzt, die beim Durchdringen mit dem geschlossenzelligen Schaum (18) deformiert und versteift werden.

FIG. I

FIG. 2

FIG. 3

FIG.4.